Europäisches Patentamt

European Patent Office

Office européen des brevets

(11) Publication number: **0 430 464 B1**

# EUROPEAN PATENT SPECIFICATION

(45) Date of publication of patent specification: **28.09.94**  (51) Int. Cl.⁵: **C06C 15/00**, C06B 33/04, F42B 4/26

(21) Application number: **90312213.3**

(22) Date of filing: **08.11.90**

(54) **Infrared illuminant.**

(30) Priority: **29.11.89 US 443658**

(43) Date of publication of application:
**05.06.91 Bulletin 91/23**

(45) Publication of the grant of the patent:
**28.09.94 Bulletin 94/39**

(84) Designated Contracting States:
**DE FR GB IT SE**

(56) References cited:
**DE-A- 3 506 222**      **DE-C- 291 891**
**DE-C- 840 049**       **FR-A- 2 316 204**
**FR-A- 2 346 634**     **GB-A- 1 277 528**
**GB-A- 2 176 178**     **US-A- 2 373 799**
**US-A- 3 733 223**

(73) Proprietor: **THIOKOL CORPORATION**
**2475 Washington Boulevard**
**Ogden Utah 84401 (US)**

(72) Inventor: **Nielson, Daniel B.**
**86 North 200 West**
**Brigham City, Utah 84302 (US)**
Inventor: **Jones, Leon L.**
**344 West Pleasant View**
**Ogden, Utah 84414 (US)**

(74) Representative: **Bankes, Stephen Charles Digby et al**
**BARON & WARREN**
**18 South End**
**Kensington**
**London W8 5BU (GB)**

## Description

The invention relates to infrared illuminant compositions and flares produced therefrom and useful to enhance the use in night vision devices such as goggles. The invention also relates to a process for producing infrared illuminant flares to prevent chunking out of pieces of the illuminant at pressing increments during burning.

Infrared illuminant flares have been proposed for use in enhancing the use of night vision devices such as night vision goggles. Generally, it is desirable that such flares be ones that produce light predominantly or almost exclusively in the infrared region with the production of little or substantially no visible light. Such infrared illuminant flares are quite useful where it is desirable to conduct operations in a hidden, sheltered, masked or concealed manner, i.e. in a manner not generally visible to others or those without benefit of the aforementioned night vision devices.

US-A-3,733,233 discloses an infrared illuminant flare comprising a binder, silicon and hexamine as main fuel components, $KNO_3$, $RbNO_3$ or $CsNO_3$ as an oxidant.

Infrared illuminant compositions and flares proposed heretofore have suffered from a number of drawbacks. Among the drawbacks is the low infrared intensity, slow burn rate and the side burning and the related chunking out of big pieces of illuminant at pressing increments of the illuminant composition in the flares during burning. Another serious drawback to such proposed infrared illuminants is the undesirable presence of visible light during burning of the compositions.

Thus, a need exists for an infrared illuminant composition and flares produced therefrom that exhibits an increased or accelerated burning rate, and also exhibits an increased infrared intensity while maintaining a low visible light intensity. A further need exists for such improved infrared illuminant flares that are substantially free of side burning and the related chunking out of big pieces of illuminant at the pressing increments in the flares during burning. It is desirable that an infrared illuminant composition and flares therefrom be provided which enhance the use of the night vision sensitive devices such as infrared goggles by producing increased illumination without any significant increase in visible light. A further object of this invention is to provide an infrared illuminant composition and flares therefrom that provide increased infrared intensity in the wavelengths of from about 700 to about 1100 nanometers. A still further object of this invention is to provide an infrared illuminant composition and flares therefrom which have reduced or substantially no soot formation during burning. It is highly desirable that an infrared illuminant be provided that has maximum infrared light intensity, minimal visible light intensity, increased burn rate and no chunking out of pieces of illuminant during burning.

In the accompanying drawings:

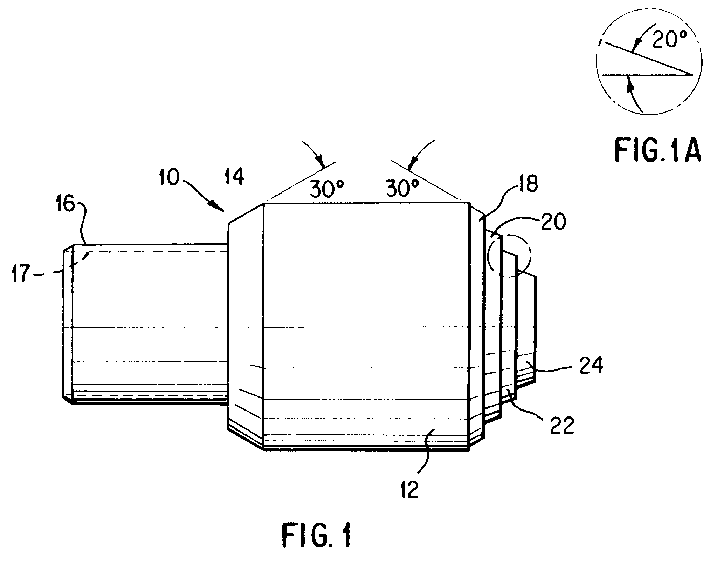

FIG. 1 is a plan view of a multi-stepped pressing foot employed to produce improved infrared illuminant flares; and

FIG. 1A shows an enlarged detail of Figure 1.

Infrared illuminant compositions and infrared illuminant flares produced therefrom are provided by a composition comprising potassium nitrate, cesium nitrate, hexamine, silicon, boron, ferric oxide and a suitable binder. Infrared illuminant flares are provided with substantially no side burning or chunking out of pieces of illuminant during burning by use of a multi-stepped pressing foot to pack the illuminant composition in flare tubes.

Infrared illuminant compositions of improved burn rate, increased infrared light intensity with minimal visible light intensity and substantially no chunking out of illuminant during burning of an infrared illuminant flare is provided by a composition which comprises the following compositions:

EP 0 430 464 B1

| Component | Weight percent |
|---|---|
| Potassium nitrate | at least 50, referably about 60% |
| Cesium nitrate | 9 to 20%, preferably 9 to 10% |
| Hexamine | 14 to 18%, preferably 15 to 16% |
| Silicon | 5 to 10%, preferably 6 to 7% |
| Boron | 1 to 3%, preferably about 2% |
| Ferric oxide | ½ to 1½%, preferably about 1% |
| Binder | 4 to 8%, preferably about 6% |

wherein the total weight of all the components together comprises 100%.

As a binder for the composition one may employ any suitable binder that does not adversely affect the characteristic of the infrared illuminant composition or the flares produced therefrom. Preferably, the polymer will be, for example, a polyester containing short carbon fragments in the backbone so as to reduce or eliminate soot formation during burning. As an example of a suitable binder there may be mentioned Formrez F 17-80 polyester of Witco Chemical Corp. and more particularly, a curable polyester resin composition comprising, by weight, from 81 to 83% to, preferably 82.5% Formrez 17-80 polyester resin, 15 to 17%, preferably about 16.5% epoxy such as ERL 510 of Ciba-Geigy Corporation and 0 to 2%, preferably 1% of a catalyst such as iron linoleate. Most preferably about 4% by weight of a binder comprised of 82.5% Formrez 17-80 polyester resin, 16. 5% ERL 510 epoxy and 1% iron linoleate is employed in the preferred infrared illuminant compositions of this invention. Such a binder composition is hereinafter simply referred to as WITCO 1780.

A preferred infrared composition of this invention comprises the following composition:

| Component | Weight percent |
|---|---|
| Potassium nitrate | about 60% |
| Cesium nitrate | about 9% |
| Hexamine | about 15% |
| Silicon | about 7% |
| Boron | about 2% |
| Ferric oxide | about 1% |
| WITCO 1780 | about 6%. |

A most preferred infrared illuminant composition of this invention comprises:

| Component | Weight percent |
|---|---|
| Potassium nitrate | 58.75% |
| Cesium nitrate | 9.79% |
| Hexamine | 15.67% |
| Silicon | 6.85% |
| Boron | 1.96% |
| Ferric oxide | 0.98% |
| WITCO 1780 | 6.00%. |

As other examples of infrared illuminant compositions of this invention there may be mentioned the following exemplary compositions:

3

| Component | Composition | Weight percent A | B |
|---|---|---|---|
| Potassium nitrate | | 60.0% | 60.0% |
| Cesium nitrate | | 9.0% | 10.0% |
| Hexamine | | 15.0% | 16.0% |
| Silicon | | 7.0% | 2.0% |
| Boron | | 2.0% | 2.0% |
| Ferric Oxide | | 1.0% | 1.0% |
| WITCO 1780 | | 6.0% | 4.0% |

With the infrared compositions of this invention infrared intensity and burn rate were increased significantly. Infrared intensity increases of up to 150% and burn rate increases of up to 110% were achieved without adversely increasing the visible light compared to the herebefore proposed infrared illuminants comprising, based on weight, 70% potassium nitrate, 10% silicon, 16% hexamine and 4% of a fluorocarbon binder such as a fluorocarbon based on a copolymer of vinylidene fluoride and hexafluoropropylene available from El duPont as VITON A.

The infrared illuminant compositions were evaluated based on a concealment index which is the ratio of infrared light of visible light observed when burning. The test equipment for determining the index comprised a photometric silicon detector and a photovoltaic silicon detector. The photometric detector has a filter that follows the response of the human eye (visible detector). The photovoltaic detector uses a filter that blocks out all light below 700 nanometer and allows only light greater than 700 nanometer to pass (infrared detector). The upper limit of the photovoltaic detector is 1,100 nanometers, providing the filtered detector a range of between 700 to 1,100 nanometers.

In the compositions of this invention silicon and hexamine are employed as the main fuel components because their combustion products have minimal visible light output, i.e. both have good concealment indexes. potassium nitrate is employed as an oxidizer in the compositions of this invention. While potassium perchlorate was found to increase the burn rate of infrared illuminant compositions when employed as an oxidizer therein it also undesirably and unacceptably increased the visible light even at reduced percentage levels in the composition. Potassium nitrate produced a very low visible light output and thus had a good concealment index, however, the burn rate was neither fast enough or increased sufficiently to produce an acceptable infrared illuminant flare.

As burn rate catalysts both boron and magnesium were evaluated at low levels in the composition to increase the burn rate. However, magnesium produced too much visible light to be acceptable. Boron, on the other hand, was found to increase the burn rate by up to 50% with only slight increases in visible light when employed at 2 to 3% by weight in the composition. When ferric oxide was employed in the composition at about 1% by weight it had no effect on burn rate. However, it was unexpectedly discovered that when boron and ferric oxide were used together in the compositions dramatic increases in the burn rate could be achieved. For example, burn rate increases of up to 110% were observed with sight increases in the visible light when 2% boron and 1% ferric oxide were employed in the compositions. In addition increases measuring 150% in the infrared light intensity were also observed.

Cesium nitrate is present in the compositions of this invention as an oxidizer and also to aid in accelerating the burn rate. More importantly, however, cesium nitrate has been found to broaden the infrared spectral output and improve the infrared efficiency. The potassium nitrate and cesium nitrate appear to augment the action of each other.

All these ingredients have been found to favorably affect the burn rate significantly without adversely affecting the visible light output. Ferric oxide, boron and cesium nitrate when used together in the infrared illuminant compositions of this invention increase the burn rate from 0.64 to 1.4 mm/sec (from 0.025 to 0.055 in./sec.) and more than double the infrared intensity from 400 to 1,060 watts/steradian while only increasing the visible light intensity from 2,000 to 3,000 candlepower.

The compositions of this invention may be prepared in any suitable manner such as for example mixing all the ingredients in an acetone slurry in the following manner. The binder, for example, WITCO 1780, is dissolved in acetone in a 20% solution and the proper weight of this solution is added to potassium nitrate in a Hobart mixer. Additional acetone is added to the mix to produce a paste. The other components are added and then mixing is continued under an air flow until the mixture appears dry, i.e. about 4% moisture.

Infrared illuminant flares are produced by pressing the illuminant composition into suitable flare cases, such as for example, 2.75 in. (69.85 mm) diameter suitably lined aluminum cases. The tubes or flares can be any suitable length but are preferably about 9 or 18 inches (228.6 or 457.2 mm) in length. While the illuminant composition can be pressed into the case in any suitable manner it has been discovered that by the use of a novel multi-stepped pressing foot designed for this purpose flares with reduced chunking out and side burning can be produced. Such a multi-stepped pressing foot is disclosed in Figure 1. The use of such a multi-stepped pressing foot to press the infrared illuminant compositions into flare cases produces flares which are substantially free of chunking and essentially eliminates the separation and ejection of pressed increments of the illuminant composition by increasing the illuminant density near the case wall. This essentially eliminates the low density illuminant areas where side burning occurs. Thus, by reducing side burning, the related chunking is also reduced. Pressing is generally accomplished at a pressure of about 8,000 to about 10,000 psi (55.6 to 68.95 M Pa). The pressed material is extremely hard which makes illuminant cutback nearly impossible. For the longer 18 in. (457.2 mm) cases the illuminant composition is pressed into the case in about 12 increments and the resulting grain is about 13.3 in. (337.82 mm), while for the shorter 9 in. (228.6 mm) cases the illuminant composition is pressed into the case in about 6 increments an the resulting grain is about 4.3 in. (109.22 mm) in length.

Referring to Figure 1 a multi-stepped pressing foot suitable for use in producing illuminant flares is illustrated. The multi-stepped pressing foot, designated generally by the reference numeral 10, comprises a main cylindrical body member 12. At one end 14, body number 12 is provided with an inwardly tapered portion (tapered toward the axis of cylindrical body 12) which is connected to a mounting post 16 having attaching means 17 for attaching the foot 10 to a suitable pressure-providing device (not shown). At the other end 18 of said cylindrical body 12 the body is likewise provided with an inwardly tapered first step portion which is connected to a plurality, preferably three, of progressively smaller diameter inwardly tapered, trapezoidally shaped (parallel in the axial direction) circular steps 20, 22 and 24. In a preferred embodiment of this multi-stepped pressing foot for use in filing 2.75 in. (59.85 mm) diameter flare cases, the outside diameter of body 12 is 2.34 in. (59.436 mm), the angle of taper at ends 14 and 18 is 30% from the axis of body 12, and the angle of taper of steps 20, 22 and 24 is about 20° from the axis of body 12 (Fig. 1A). The smaller diameter of step 24 is 1.0 in. (25.4 mm) and its larger diameter 1.12 in. (28.45 mm). For step 22 its smaller diameter is 1.264 in. (32.106 mm) and the larger diameter is 1.384 in. (35.15 mm). For step 20 its smaller diameter is 1.528 in. (38.81 mm) and its larger diameter is 1.648 in. (41.86 mm).

The multi-stepped pressing foot as illustrated in the drawing is suitable for use in producing infrared illuminant flares from the novel compositions of this invention, to produce flares with decreased chunking and side burning.

## Claims

1. An infrared illuminant flare composition comprising:

| Component | Weight percent |
|---|---|
| Potassium nitrate | at least 50% |
| Cesium nitrate | 9 to 20% |
| Hexamine | 14 to 18% |
| Silicon | 5 to 10% |
| Boron | 1 to 3% |
| Ferric oxide | $\frac{1}{2}$ to $1\frac{1}{2}$% |
| Binder | 4 to 8% |

wherein the total weight of all the components together comprises 100%.

2. An infrared illuminant flare composition according to claim 1 which comprises:

| Component | Weight percent |
|---|---|
| Potassium nitrate | about 60% |
| Cesium nitrate | 9 to 10% |
| Hexamine | 15 to 16% |
| Silicon | 6 to 7% |
| Boron | about 2% |
| Ferric oxide | about 1% |
| Binder | about 6% |

3. An infrared illuminant flare composition according to claim 1 or claim 2 wherein the binder is a curable polyester resin composition.

4. An infrared illuminant flare composition according to claim 3 which comprises:

| Component | Weight percent |
|---|---|
| Potassium nitrate | about 60% |
| Cesium nitrate | about 9% |
| Hexamine | about 15% |
| Silicon | about 7% |
| Boron | about 2% |
| Ferric oxide | about 1% |
| Curable polyester binder | about 6% |

5. An infrared illuminant flare composition according to claim 3 which comprises:

| Component | Weight percent |
|---|---|
| Potassium nitrate | 58.75% |
| Cesium nitrate | 9.79% |
| Hexamine | 15.67% |
| Silicon | 6.85% |
| Boron | 1.96% |
| Ferric oxide | 0.98% |
| Curable polyester binder | 6.00% |

6. An infrared illuminant flare composition according to any one of claims 3 to 5 wherein the curable polyester comprises a polyester resin, an epoxy resin and optionally a cure catalyst.

7. An infrared illuminant flare composition according to claim 6 wherein the iron linoleate is present as a cure catalyst.

8. An infrared illuminant flare composition according to any preceding claim which upon burning has a burn rate of from 0.055 in./sec (1.4 mm/sec), an infrared intensity of about 1,060 watts/steradian and visible light intensity of less than 3000 candlepower.

9. An infrared illuminant flare comprising a flare casing packed with an infrared illuminant composition according to any preceding claim.

10. A process for making an infrared illuminant flare which comprises pressing an infrared illuminant composition according to any one of claims 1 to 8 into a flare case, wherein a multi-stepped pressing foot (10) is used for pressing the composition in the case.

6

**11.** A process according to claim 10 wherein the multi-step pressing foot exerts a pressure on the infrared illuminant composition in the case of 8000 to 10,000 psi (55.16 to 68.95 M Pa).

**Patentansprüche**

**1.** Infrarot-Beleuchtungseinrichtungszusammensetzung mit:

| Bestandteil | Gewichtsprozente |
|---|---|
| Kaliumnitrat | wenigstens 50 % |
| Caesiumnitrat | 9 bis 20 % |
| Hexamin | 14 bis 18 % |
| Silicium | 5 bis 10 % |
| Bor | 1 bis 3 % |
| Eisen-III-oxid | $\frac{1}{2}$ bis $1\frac{1}{2}$ % |
| Bindemittel | 4 bis 8 % |

worin das Gesamtgewicht aller Komponenten zusammen 100 % umfaßt.

**2.** Infarot-Beleuchtungseinrichtungszusammensetzung nach Anspruch 1 mit:

| Bestandteil | Gewichtsprozente |
|---|---|
| Kaliumnitrat | wenigstens 60 % |
| Caesiumnitrat | 9 bis 10 % |
| Hexamin | 15 bis 16 % |
| Silicium | 6 bis 7 % |
| Bor | etwa 2 % |
| Eisen-III-oxid | etwa 1 % |
| Bindemittel | etwa 6 % |

**3.** Infrarot-Beleuchtungseinrichtungszusammensetzung nach Anspruch 1 oder Anspruch 2, worin das Bindemittel eine härtbare Polyesterharzzusammensetzung ist.

**4.** Infrarot-Beleuchtungseinrichtungszusammensetzung nach Anspruch 3 mit:

| Bestandteil | Gewichtsprozente |
|---|---|
| Kaliumnitrat | etwa 60 % |
| Caesiumnitrat | etwa 9 % |
| Hexamin | etwa 15 % |
| Silicium | etwa 7 % |
| Bor | etwa 2 % |
| Eisen-III-oxid | etwa 1 % |
| härtbares Polyesterbindemittel | etwa 6 % |

**5.** Infrarot-Beleuchtungseinrichtungszusammensetzung nach Anspruch 3 mit:

| Bestandteil | Gewichtsprozente |
|---|---|
| Kaliumnitrat | 58,75 % |
| Caesiumnitrat | 9,79 % |
| Hexamin | 15,67 % |
| Silicium | 6,85 % |
| Bor | 1,96 % |
| Eisen-III-oxid | 0,98 % |
| härtbares Polyesterbindemittel | 6,00 % |

6. Infrarot-Beleuchtungseinrichtungszusammensetzung nach einem der Ansprüche 3 bis 5, worin der härtbare Polyester ein Polyesterharz, ein Epoxyharz und gegebenenfalls einen Härtungskatalysator umfaßt.

7. Infrarot-Beleuchtungseinrichtungszusammensetzung nach Anspruch 6, worin als ein Härtungskatalysator Eisenlinolat vorliegt.

8. Infrarot-Beleuchtungseinrichtungszusammensetzung nach einem der vorausgehenden Ansprüche, die beim Verbrennen eine Brenngeschwindigkeit von 0,055 Inch/sec (1,4 mm/sec), eine Infrarotintensität von etwa 1,060 Watt/Sterad und einen Intensität von sichtbarem Licht von weniger als 3000 Kerzenstärken hat.

9. Infrarot-Beleuchtungseinrichtung mit einem Beleuchtungseinrichtungsgehäuse, das mit einer Infrarot-Leuchtzusammensetzung nach einem der vorausgehenden Ansprüche gepackt ist.

10. Verfahren zur Herstellung einer Infrarot-Beleuchtungseinrichtung, bei dem man einen Infrarot-Leuchtzusammensetzung nach einem der Ansprüche 1 bis 8 in ein Beleuchtungseinrichtungsgehäuse preßt, wobei ein mehrstufiger Preßfuß (10) zum Pressen der Zusammensetzung in das Gehäuse verwendet wird.

11. Verfahren nach Anspruch 10, bei dem der mehrstufige Preßfuß einen Druck von 8000 bis 10 000 psi (55,16 bis 68,95 MPa) auf die Infrarot-Leuchtzusammensetzung in dem Gehäuse ausübt.

**Revendications**

1. Composition de fusée éclairante en lumière infrarouge, comprenant :

| composant | pourcentage massique |
|---|---|
| Nitrate de Potassium | au moins 50% |
| Nitrate de Cesium | 9 à 20 % |
| Hexamine | 14 à 18 % |
| Silicium | 5 à 10 % |
| Bore | 1 à 3 % |
| Oxyde Ferrique | 1/2 à 1 1/2% |
| Liant | 4 à 8 % |

dans laquelle le poids total de tous les composants réunis est de 100%.

2. Composition de fusée éclairante en lumière infrarouge selon la revendication 1, comprenant :

| composant | pourcentage massique |
|---|---|
| Nitrate de Potassium | environ 60 % |
| Nitrate de Cesium | 9 à 10 % |
| Hexamine | 15 à 16 % |
| Silicium | 6 à 7 % |
| Bore | environ 2 % |
| Oxyde ferrique | environ 1 % |
| liant | environ 6 % |

3. Composition de fusée éclairante en lumière infrarouge selon la revendication 1 ou la revendication 2, dans laquelle le liant est une composition de résine de polyester pouvant être cuite.

4. Composition de fusée éclairante en lumière infrarouge selon la revendication 3, comprenant :

| composant | pourcentage massique |
|---|---|
| Nitrate de Potassium | environ 60 % |
| Nitrate de Cesium | environ 9 % |
| Hexamine | environ 15 % |
| Silicium | environ 7 % |
| Bore | environ 2 % |
| Oxyde ferrique | environ 1 % |
| liant polyester pouvant être cuit | environ 6 % |

5. Composition de fusée éclairante en lumière infrarouge selon la revendication 3, comprenant :

| composant | pourcentage massique |
|---|---|
| Nitrate de Potassium | 58,75 % |
| Nitrate de Cesium | 9,79 % |
| Hexamine | 15,67 % |
| Silicium | 6,85 % |
| Bore | 1,96 % |
| Oxyde ferrique | 0,98 % |
| liant polyester pouvant être cuit | 6,00 % |

6. Composition de fusée éclairante en lumière infrarouge selon l'une quelconque des revendications 3 à 5, dans laquelle le polyester pouvant être cuit comprend une résine polyester, une résine époxy, et de façon optionnelle un catalyseur de cuisson.

7. Composition de fusée éclairante en lumière infrarouge selon la revendication 6, dans laquelle le linoleate de fer est présent comme catalyseur de cuisson.

8. Composition de fusée éclairante en lumière infrarouge selon l'une quelconque des revendications précédentes, qui lorsqu'elle brûle, a une vitesse de combustion d'au moins 0,055 pouce/s (1,4 mm/s), une intensité en infrarouge d'environ 1 060 Watt/stéradian et une intensité en lumière visible inférieure à 3 000 intensités lumineuse.

9. Fusée éclairante en lumière infrarouge, comprenant une enveloppe de fusée éclairante bourrée d'une composition éclairante en lumière infrarouge selon l'une quelconque des revendications précédentes.

10. Procédé de fabrication d'une fusée éclairante en lumière infrarouge comprenant l'étape de presser une composition éclairante en lumière infrarouge selon l'une quelconque des revendications 1 à 8, dans une enveloppe de fusée éclairante, dans lequel un pied presseur (10) à plusieurs gradins est utilisé pour presser la composition dans l'enveloppe.

11. Procédé selon la revendication 10, dans lequel le pied presseur à plusieurs gradins exerce, sur la composition éclairante en lumière infrarouge contenue dans l'enveloppe, une pression comprise entre 8 000 et 10 000 psi (55,16 à 68,95 M Pa).

FIG.1A

FIG. 1

EP 0 430 464 B1